# EUROPEAN PATENT APPLICATION

(11) **EP 2 159 163 A1**
(43) Date of publication of application: **03.03.2010**
(21) Application number: 09168702.0
(22) Date of filing: 26.08.2009
(51) Int. Cl.: B65D 65/46, C08B 30/00

(54) **Environment-friendly utensil / object for packaging / supporting / accommodating / depositing food / beverage / merchandise**

(30) Priority: 26.08.2008 TW 97132601
(71) Applicant: Earthpack Inc., Sulin City T'ai pei 238 (TW)
(72) Inventor: Lin, Pin Liang, 242, Xinzhuang City (TW)
(74) Representative: Viering, Jentschura & Partner

(57) **Abstract**

Utensils or objects for packaging or supporting or accommodating or depositing food and/or beverage, or for packaging merchandise, are provided. The utensil or object provided by the present invention comprises a main body and plural voids inside the main body, the main body made of natural plants, the plural voids resulting in ideal resistance to the conducting of heat or iciness, leading to application superiority such as the convenience for human hand to easily hold even when hot or icy food/beverage/commodity is deposited therein.

## Description

### FIELD OF THE INVENTION

The present invention generally relates to environment-friendly material with low thermal conductance, particularly to utensils for packaging or supporting or accommodating or depositing food and/or beverage, and to objects for packaging merchandise.

### BACKGROUND OF THE INVENTION

For the purposes of achieving lower cost, convenient usage, easier mass production, and less likelihood of causing injury, plastic materials such as those having Polystyrene or the like as composition, have already replaced metal or wood material for a long time. For example, utensils having Polystyrene or the like as composition, have already replaced metal or wood utensils for a long time. The circumstance and trend remain unchanged, and may even become more significant, bringing about very serious threat to environment worldwide. This is because the spontaneous decomposition of used plastic material should simply be deemed impossible. Even if artificial processes are extra applied, one hundred percent of decomposition of plastic material is still difficult to achieve, not to mention the fact that the extra applied processes may, by themselves, produce material hurting environment. On the other hand, even if it is assumed the plastic material may decompose when buried in the ground for a very long time, its compositions penetrating into the earth may still do damages to the environment. With popularization and shorter life cycle of using plastic material, the amount of used and discarded plastic material to be handled expands significantly, resulting in unimaginable damages to the environment. For example, disposable plastic utensils are very popular, and the amount of used and discarded plastic utensils to be handled is extremely huge. Although reclaiming waste may be an alternative solution to the problem, its reclaimable rate, cost reasonableness, and limitation on application field shall raise an issue: is the process of reclaiming waste really able to immunize the environment from being damaged by plastic material?

In view of the damage done to environment by plastic material, and the difficulty to have an ideal solution, the present invention provides plastic-free material for the use in packaging or supporting or accommodating or depositing food and/or beverage, and in packaging merchandise.

In many application fields, the higher resistance of material to the conducting of heat or iciness therein, the more convenient they are for use. One among the examples is the utensils to be held by human hands to support or accommodate or deposit hot food/beverage therein. It cannot be practical for human hands to contact utensils having no sufficient resistance to the conducting of heat while having hot food/beverage accommodated therein. Another one among the examples is the utensils expected, particularly in the Winter, to keep warm the food/beverage accommodated therein, so that people may still enjoy warm food/beverage even after it has been taken out from heating apparatus. Although one type of material made of Styrofoam (polystyrene plastic) containing voids therein also provide resistance to the conducting of heat therein, they are inevitably doomed to do damage to the environment due to its undecomposable compositions of plastic material.

On the other hand, for the applications of packaging, accommodating, or depositing hot food/beverage, plastic utensils inevitably raise concern about toxicant coming into existence.

One type of material called "bio-plastic" such as Poly Lactic Acid (**PLA**) in the shape of grain, is made from corn or the like by the processes of conversion, fermentation, polymerization, etc. The bio-plastic is intended to replace chemical plastic which cannot spontaneously decompose. However, the bio-plastic is similar to chemical plastic in terms of compositions. Its speed of natural decomposition is far from ideal, and it tends to become deformed in response to high temperature, according to the comments provided by a reliable research institute. Furthermore, the process to produce the bio-plastic is rather sophisticated, thus its manufacturing cost is relatively high, critically limiting its potential to replace chemical plastic.

In short, there is demand for material benefiting environment protection by replacing those made of plastic material. There is also demand for material having ideal resistance to the conducting of heat and iciness therein. Furthermore, there is demand for utensils immunizing users from worrying about the likelihood of food/beverage being contaminated by toxicant which is supposed to be inherent in plastic material. This is particularly significant when utensils are used at higher temperature.

### SUMMARY OF THE INVENTION

An object of the present invention is to benefit environment protection by providing material or utensils to replace those made of plastic composition.

Another object of the present invention is to provide material or utensils not only benefiting environment protection but also having ideal resistance to the conducting of heat and iciness therein, i.e., having ideally low thermal conductance.

A further object of the present invention is to provide material or utensils for replacing those made of plastic composition, to immunize users from worrying about the likelihood of food/beverage being contaminated by toxicant inherent in plastic material.

Another further object of the present invention is to provide processes for manufacturing material or utensils with economical cost while benefitting environment protection.

The other further object of the present invention is to provide processes for manufacturing economical material or utensils having low thermal conductance.

The other still further object of the present invention is to provide processes for manufacturing economical material or utensils immunizing users from concerning about unsafety of food/beverage contacting plastic material.

One of the application features of the material or utensils provided by the present invention is that they have merits of plastic material while without the shortcoming of plastic material doing damage to environment.

Another one of the application features of the material or utensils provided by the present invention is that they have ideally low thermal conductance and users can hold them by hand even when hot or icy food/beverage/commodity are accommodated therein.

The other one of the application features of the material or utensils provided by the present invention is that the users can be immunized from worrying about the likelihood of food/beverage/merchandise being contaminated by the toxicant inherent in plastic material.

More features and objects of the present invention may be seen from the following descriptions.

An aspect of the present invention is an object or utensil comprising a main body and multiple voids dispersed inside the main body. The main body includes starch which constitutes more than 45 percent by weight of the main body, total volume of the multiple voids ranges between 5 percent and 50 percent of the volume of the utensil or the object. The so-called "volume of the utensil or the object" above means the volume enclosed by the entire surface of the main body of the utensil or the object, also means the total volume of the main body and the multiple voids inside the main body. Because starch can decompose spontaneously without producing toxicant, and the multiple voids inside main body can provide ideal resistance to the conducting of heat and iciness (i.e., ideally low thermal conductance), the utensil or the object provided by the present invention has strong points of foaming plastic utensil while without its shortcoming of doing damage to environment due to its undecomposable plastic material. In addition, the utensils provided by the present invention can immunize user from worrying about the likelihood of food/beverage being contaminated by toxicant inherent in plastic material.

Preferably the main body of the utensil or the object provided by the present invention includes plant fiber of glucides, or further includes plant fiber of another type, with the length of the plant fiber of another type larger than that of the plant fiber of glucides. Preferably the sum of the plant fiber of glucides and another type ranges between 5 percent and 25 percent by weight of the main body, so that the quality and performance of the utensil or the object provided by the present invention can be significantly advanced.

Preferably the main body of the utensil or the object provided by the present invention includes plant fiber of paper pulp which is the type of fiber constituting one composition of paper to provide paper with tenacity or bending strength. The plant fiber of paper pulp may function as the aforecited "plant fiber of another type".

The main body of the utensil or the object provided by the present invention may have a fixed shape or a bendable shape or even an elastic shape.

Further preferably the main body of the utensil or the object provided by the present invention includes talc powder. The quality of the utensil or the object provided by the present invention can be further upgraded, if the talc powder ranges between 5 percent and 50 percent by weight of the main body.

As long as the paper pulp used as a composition is not from unnatural material such as plastic material, and talc powder is used as a composition, the utensil or the object provided by the present invention shall have its quality and performance significantly upgraded while having no adverse effect to environment, as talc powder is not the kind of material adverse to environment. In other words, the utensil or the object provided by the present invention can have more merits compared to plastic material while having no shortcomings of plastic material.

The starch included in the main body of the utensil or the object provided by the present invention may be replaced by the other material in the category of carbohydrate, so another aspect of the present invention is an object or utensil comprising a main body and multiple voids dispersed inside the main body. The main body includes more than 50 percent carbohydrate by weight, and total volume of the multiple voids ranges between 5 percent and 50 percent of the volume of the utensil or the object.

The other aspect of the present invention is a process for manufacturing the objects or utensils suggested by the present invention. The process comprises: preparing a material including starch and a molding aid; stirring the material (the more uniformly mixed the better); applying heat to the material until the material becomes a colloid (e.g. material in a gelatinizing state); and using a mold with temperature higher than 150°C to make the colloid become a solid with multiple voids spontaneously dispersed therein. The solid with multiple voids spontaneously dispersed therein is the utensil or the object suggested by the present invention. The colloid is poured into the cavity of the mold and the shape of the solid is defined by the cavity of the mold. The multiple voids dispersed inside the solid result from the foaming of the material at high temperature and from the vaporizing of water out of the material at high temperature. The molding aid is biological enzyme. For example, the molding aid is viable enzyme. Preferably the molding aid ranges between 0.2 percent and 2 percent by weight of the material. Liquid may be applied to the material to help the material become the colloid. The step of applying heat to the material may be implemented by applying water to the material, with the water at a temperature higher than the temperature of the material. Preferably the water is at a temperature higher than 80°C when applied to the material, and the mold is at a temperature between 180°C and 220°C when used to make the colloid become the solid. Preferably the material includes at least one type of plant fiber selected from glucides and paper pulp. The plant fiber of glucides is to promote mechanical strength of the utensil or the object and to strengthen hydrophobic interaction of the surface of the utensil or the object. The paper pulp is the type of fiber constituting one composition of paper to provide paper with tenacity. Further preferably the sum of the glucides and the paper pulp ranges between 5 percent and 25 percent by weight of the material. Still further preferably the starch includes water-soluble starch for helping cementation of the material and for promoting the surface hardness of the solid.

The starch used according to the present invention preferably includes at least two types of starch, one being open chain type and another being closed chain type. If carbohydrate is used to replace starch, the carbohydrate preferably includes at least two types of carbohydrate, one being open chain type and another being closed chain type.

The shape and size of the main body of the object or utensil provided by the present invention, is not limited to any specification, and instead can be defined according to buyers' demand. The shape and size and distribution of the multiple voids inside the main body of the utensil or the object provided by the present invention are irregular, and are usually random in fact. In other words, the voids inside each product provided by the present invention may be different from those inside another product provided by the present invention, in terms of shape, or size, or distribution inside the main body, even the two products are from the same manufacturing batch.

The present invention may best be understood through the following description with reference to the accompanying drawings, in which:

### BRIEF DESCRIPTION OF THE DRAWINGS

Fig. 1 is a schematic drawing showing side views of two embodied examples of the utensils provided by the present invention, one side view for cup, another for a bowl, the cup or the bowl may be deemed an object usable for packaging merchandise.
Fig. 2a is a schematic drawing showing a cross section view of the cup 1 as shown in Fig.1.
Fig. 2b is a schematic enlarged drawing showing part of main body 3 of the cup 1 of Fig. 2a.
Fig. 3a is a schematic drawing showing a cross section view of the bowl 2 as shown in Fig.1.
Fig. 3b is a schematic enlarged drawing showing a cross section view of part of main body 5of bowl 2 of Fig. 3a.
Fig. 4 is a flow chart showing an embodied example of process for manufacturing utensil according to the present invention.

### DETAILED DESCRIPTION OF PREFERRED EMBODIMENTS

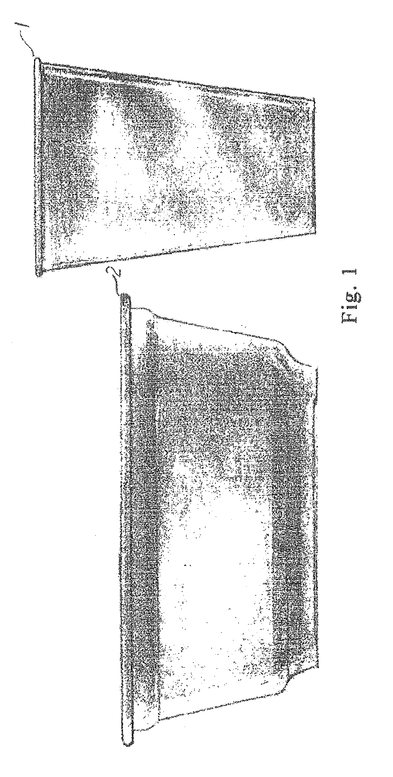

Fig. 1 is a schematic drawing showing side views of two embodied examples of the utensil provided by the present invention, one side view for cup 1, another for bowl 2. Cup 1 and bowl 2 may also be deemed objects usable for packaging merchandise.

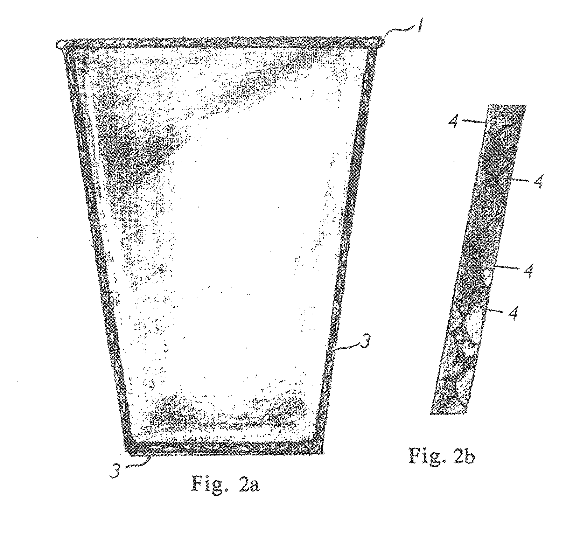

Fig. 2a is a schematic drawing showing a cross section view of the main body 3 of the cup 1 as shown in Fig.1. Fig. 2b is a schematic enlarged drawing showing part of the main body 3 of the cup 1 of Fig. 2a. As shown in Figs. 2a and 2b, the utensil provided by the present invention comprises a main body 3 and multiple voids 4 (represented by blank spaces as shown in Fig. 2b) inside the main body 3. The relatively dark part in Fig. 2b represents the part of main body 3 with smaller density of voids 4. Total volume of the multiple voids 4 inside main body 3 ranges between 5 percent and 50 percent of the total volume of cup 1. The total volume of cup 1 means the total volume enclosed by the entire surface of main body 3, or means the sum of the volume of main body 3 and the total volume of multiple voids 4.inside main body 3.

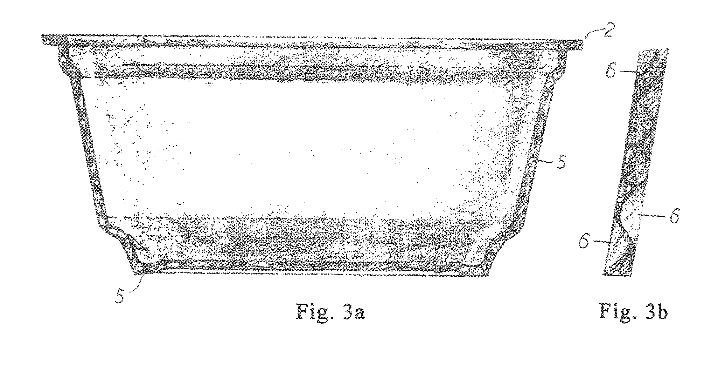

Fig. 3a is a schematic drawing showing a cross section view of the main body 5 of the bowl 2 as shown in Fig.1. Fig. 3b is a schematic enlarged drawing showing part of the main body 5 of the bowl 2 of Fig. 3a. As shown in Figs. 3a and 3b, the utensil provided by the present invention comprises a main body 5 and multiple voids 6 (represented by blank spaces as shown in Fig. 3b) inside main body 5. The relatively dark part in Fig. 3b represents the part of main body 5 with smaller density of voids 6. Total volume of the multiple voids 6 inside main body 5 ranges between 5 percent and 50 percent of the total volume of bowl 2. The total volume of bowl 2 means the total volume enclosed by the entire surface of main body 5, or means the sum of the volume of main body 5 and the total volume of multiple voids 6.inside main body 5.

The main body (3 in Fig. 2a or 5 in Fig. 3a) of the utensil provided by the present invention includes starch which constitutes more than 45 percent by weight of the main body. Alternatively, the main body (3 in Fig. 2a or 5 in Fig. 3 a) of the utensil provided by the present invention includes the other material in the category of carbohydrate which constitutes more than 50 percent by weight of the main body.

The shape and size of the main body (3 in Fig. 2a or 5 in Fig. 3a) of the utensil provided by the present invention, is not limited to what are shown in the drawings, and instead can be defined according to buyers' demand. The shape, and size, and distribution of the multiple voids (4 in Fig. 2b or 6 in Fig. 3b) inside the main body (3 in Fig. 2a or 5 in Fig. 3a), of the utensil provided by the present invention are irregular, and are usually random in fact. In other words, the shape, or size, or distribution of the voids (4 in Fig. 2b or 6 in Fig. 3b) inside the main body (3 in Fig. 2a or 5 in Fig. 3a), of the utensil (cup 1 or bowl 2 in Fig. 1) is different from one product to another product according to the present invention.

It is more preferred the main body of the utensil provided by the present invention includes plant fiber of glucides, plant fiber of paper pulp (or plant fiber of another type as long as its length is larger than that of the plant fiber of glucides), and talc powder. The sum of the plant fiber of glucides and the plant fiber of paper pulp ranges between 5 percent and 25 percent by weight of the main body. The talc powder ranges between 5 percent and 50 percent by weight of the main body.

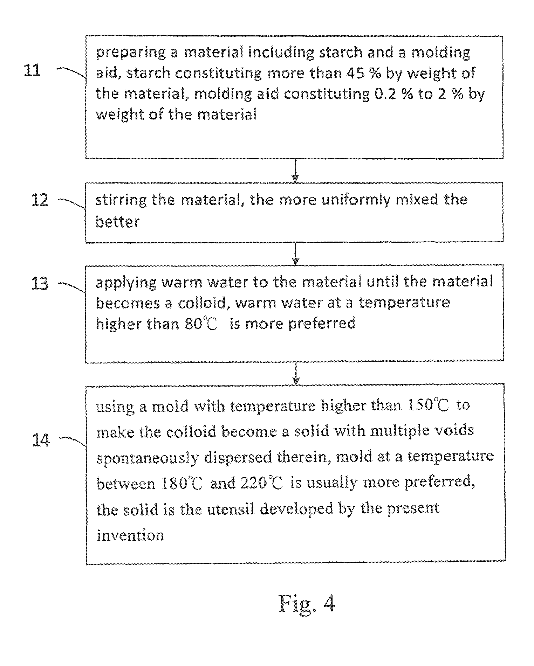

Fig. 4 is a flow chart showing an embodied example of process for manufacturing object or utensil according to the present invention. The process comprises steps 11, 12, 13, and 14 as shown in Fig. 4. Step 11 is preparing a material including starch and a molding aid, step 12 is stirring the material (the more uniformly mixed the better), step 13 is applying warm water (it is more preferred the warm water is at a temperature higher than 80 °C ) to the material until the material becomes a colloid (e.g. material in a gelatinizing state), and step 14 is using a mold with temperature higher than 150 °C (temperature between 180°C and 220°C is usually more preferred) to make the colloid become a solid with multiple voids spontaneously dispersed therein. The solid with multiple voids dispersed therein is the object or utensil suggested by the present invention. The starch included in the material prepared in step 11 constitutes more than 45 percent by weight of the material, and the molding aid included in the material prepared in step 11 constitutes 0.2 percent to 2 percent by weight of the material. The molding aid is biological enzyme (e.g. viable enzyme). The starch included in the material prepared in step 11 may be replaced by the other material in the category of carbohydrate which constitutes more than 50 percent by weight of the material. It is usually more preferred the material prepared in step 11 further includes at least one type of plant fiber selected from glucides and paper pulp. The plant fiber of glucides is to promote mechanical strength of the utensil and to strengthen hydrophobic interaction of the surface of the utensil. The paper pulp is the type of fiber constituting one composition of paper to provide paper with tenacity. The sum of the glucides and the paper pulp ranges between 5 percent and 25 percent by weight of the material. It is further preferred the starch includes water-soluble starch and talc powder, the water-soluble starch for helping cementation of the material and for promoting the surface hardness of the solid.

The colloid obtained in step 13 is poured into the cavity of the mold and the shape of the solid is defined by the cavity of the mold. Applying warm water to the material is to implement applying heat to the material. The warm water is at a temperature higher than the temperature of the material. Warm water at a temperature higher than 80°C is usually more preferred.

The starch used for the aforecited embodiments of the present invention includes at least two types of starch, one being open chain type and another being closed chain type. If carbohydrate is used to replace starch, the carbohydrate includes at least two types of carbohydrate, one being open chain type and another being closed chain type.

The utensil according to the present application means what is for packaging or supporting or accommodating or depositing food or beverage, such as bowl, cup, plate, dish, etc. The object according to the present application means what is for packaging merchandise.

While the invention has been described in terms of what are presently considered to be the most practical or preferred embodiments, it shall not be limited to the disclosed embodiments. Modifications or similar arrangements shall be deemed covered by the spirit of the invention.

## Claims

1. A utensil comprising:
a main body including more than 45 percent starch by weight; and
multiple voids dispersed inside said main body, total volume of said multiple voids ranging between 5 percent and 50 percent of the volume of said utensil.

2. The utensil according to claim 1 wherein said main body further includes plant fiber of glucides.

3. The utensil according to claim 2 wherein said main body further includes plant fiber of other type in addition to said plant fiber of glucides, said plant fiber of other type having length larger than that of said plant fiber of glucides.

4. The utensil according to claim 3 wherein the sum of said plant fiber of glucides and said plant fiber of other type ranges between 5 percent and 25 percent by weight of said main body.

5. The utensil according to claim 1 wherein said main body further includes fiber of paper pulp, said fiber of paper pulp being the type of fiber constituting one composition of paper to provide paper with tenacity.

6. The utensil according to claim 1 wherein said main body is in one of the states including fixed shape, bendable shape, and elastic shape.

7. The utensil according to claim 1 wherein said main body further comprises talc powder.

8. The utensil according to claim 7 wherein said talc powder ranges between 5 percent and 50 percent by weight of said main body.

9. A utensil comprising:
a main body including more than 50 percent carbohydrate by weight; and
multiple voids dispersed inside said main body, total volume of said multiple voids ranges between 5 percent and 50 percent of the volume of said utensil.

10. A process for manufacturing utensils, comprising:
preparing a material including starch and a molding aid;
stirring said material;
applying heat to said material until said material becomes a colloid; and
using a mold with temperature higher than 150°C to make said colloid become a solid with multiple voids spontaneously dispersed therein.

11. The process according to claim 10 wherein said molding aid is biological enzyme, and said molding aid ranges between 0.2 percent and 2 percent by weight of said material.

12. The process according to claim 10 further comprising applying liquid to said material to help said material become said colloid.

13. The process according to claim 10 wherein applying heat to said material is applying water to said material, with said water being at a temperature higher than the temperature of said material.

14. The process according to claim 10 wherein applying heat to said material is applying water with temperature higher than 80°C to said material.

15. The process according to claim 10 wherein said mold is at a temperature between 180°C and 220°C when used to make said colloid become said solid.
